# FASCICULE DE BREVET EUROPEEN

(11) **EP 2 344 012 B1**
(45) Date de publication et mention de la délivrance du brevet: **31.07.2013**
(21) Numéro de dépôt: 09764886.9
(22) Date de dépôt: 11.09.2009
(51) Int. Cl.: A47J 31/36

(54) **DISPOSITIF POUR LA PRÉPARATION D'UNE BOISSON**
GETRÄNKEZUBEREITUNGSVORRICHTUNG
DEVICE FOR PREPARING A DRINK

(30) Priorité: 13.09.2008 WO PCT/IB2008/053717
(43) Date de publication de la demande: 20.07.2011
(73) Titulaire: Ethical Coffee Company SA, 1700 Fribourg (CH)
(72) Inventeur: MARILLER, Alain, 1801 Le Mont-Pèlerin (CH)
(74) Mandataire: Grosfillier, Philippe
(86) Numéro de dépôt international: PCT/IB2009/053991
(87) Numéro de publication internationale: WO 2010/029514

(56) Documents cités:
- WO-A-2006/003115
- WO-A-2008/046740
- WO-A-2008/093232
- US-A1- 2002 148 356
- US-B1- 6 182 554

## Description

### Domaine de l'invention

La présente invention se situe dans le domaine des dispositifs pour la préparation de boissons par extraction d'une dose, p.ex. de café moulu, contenue dans une capsule.

### Etat de la technique

Des dispositifs fonctionnant selon le principe précité existent depuis de nombreuses décennies.

Les brevets US 2 899 886, US 2 968 560, US 3 403 617 et US 3 607 297 décrivent des dispositifs où la capsule est initialement perforée en plusieurs endroits, puis traversée par de l'eau sous pression.

La capsule décrite dans le brevet CH 605 293 ou dans le brevet EP 0 242 556 B1 comporte une membrane dans sa partie inférieure. De l'eau sous pression est initialement introduite dans la partie supérieure de la capsule, ce qui entraîne un gonflement de la capsule, principalement au niveau de la membrane. A partir d'une certaine pression, la membrane se déchire, autorisant de la sorte l'écoulement d'un mélange eau-café.

Dans le dispositif présenté dans le brevet EP 0 512 470 B1, en se bombant suite à l'introduction de l'eau dans la capsule, la membrane s'écrase et se perfore contre une surface qui comporte des éléments en relief.

D'autres dispositifs utilisant un mode de fonctionnement identique ou similaire à ceux précédemment décrits sont présentés dans les documents brevets suivants : EP 0 250 810 B1, EP 0 521 188 B1, EP 0 521 397 B1, EP 0 726 053 B1, EP 0 469 162 B1 et WO 92/07775.

On connaît également d'autres dispositifs où le mélange eau-café est d'abord réalisé dans la chambre qui contient la capsule, mais s'écoule seulement à partir du moment où la pression dans la chambre qui contient la capsule a atteint une valeur minimale prédéfinie. Voir notamment les demandes de brevet EP 0 726 053 A1, EP 0 622 039 A1 et EP 1 016 364 A2.

WO 2006/003115 présente un dispositif pour préparer un café « espresso » et un café « américain » à partir de la même capsule en faisant varier la compression de la capsule par un élément d'ajustement dans le piston de serrage.

### Exposé général de l'invention

La présente invention constitue une amélioration par rapport aux dispositifs de l'état de la technique. Elle consiste notamment en un mécanisme pour faciliter le retrait de la capsule une fois que celle-ci a été utilisée.

A cet effet, l'invention concerne en premier lieu un dispositif pour la préparation d'une boisson par extraction d'une dose, p.ex. de café moulu, contenue dans une capsule dotée d'une membrane d'extraction, ledit dispositif comprenant une entrée d'eau, un porte-capsule, une cage à capsule, des moyens de serrage et des moyens pour extraire ladite boisson à travers la membrane, lesdits moyens de serrage comprenant un piston, ladite cage à capsule comportant des moyens d'éjection de capsule ; caractérisé en ce que
- les moyens d'éjection de la capsule sont composés de deux parties, à savoir une pièce d'éjection et un ressort, la pièce d'éjection étant montée coulissante par rapport à la partie supérieure de la cage,
- le dispositif comprend un logement disposé dans la partie supérieure de la cage ;
le dispositif étant configuré de manière à ce qu'en position d'amorçage, la pièce d'éjection est rétractée dans le logement.

Selon une variante de l'invention le dispositif comprend un piston de serrage monté mobile par rapport à la cage à capsule.

Dans une autre variante les moyens pour extraire ladite boisson sont des pointes.

Avantageusement, les pointes sont montées mobiles relativement au porte-capsule.

De préférence, le dispositif comprend un mécanisme pour rendre les pointes mobiles solidaire du piston.

### Exposé détaillé de l'invention

L'invention est décrite plus en détail ci-après au moyen d'exemples illustrés par les figures suivantes :
La figure 1 décrit un mode de réalisation d'un dispositif selon l'invention lors de l'introduction d'une capsule.
La figure 2 décrit le dispositif de la figure 1 au repos, après fermeture de l'ensemble porte-capsule et cage à capsule.
La figure 3 décrit le dispositif de la figure 1 après serrage de l'ensemble porte-capsule et cage à capsule.
La figure 4 illustre le dispositif de la figure 1 en position active, lorsque de l'eau traverse le dispositif.

### Liste des références numériques utilisées dans les figures

1. Capsule
2. Porte-capsule
3. Cage à capsule
4. Piston de serrage
5. Entrée d'eau
6. Pointes
7. Membrane d'extraction
8. Support de pointes
9. Pointe
10. Espace d'expansion
11. Sortie de boisson
12. Collerette
13. Extrémité inférieure du piston de serrage
14. Extrémité inférieure de la cage à capsule
15. Bloc supérieur
16. Ressort supérieur
17. Pièce d'éjection de capsule
18. Ressort d'éjection
19. Bloc inférieur
20. Ressort inférieur

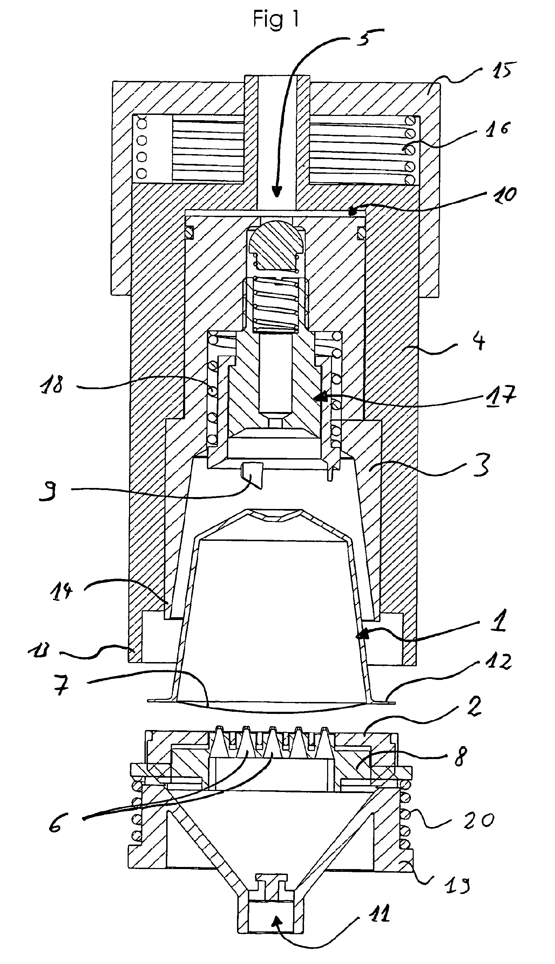

Le dispositif illustré sur les figures 1 à 4 comprend une cage à capsule 3 comportant dans sa partie supérieure une entrée d'eau 5, cette dernière étant reliée à un réservoir d'eau (non-illustré) et à une pompe (non-illustrée). La cage à capsule 3 étant par ailleurs fixée à un bloc supérieur 15 du dispositif.

Le dispositif comprend en outre un piston de serrage 4 monté coulissant par rapport à l'ensemble formé de cage à capsule 3 et du bloc supérieur 15, un ressort supérieur 16 étant disposé dans l'espace formé entre la paroi interne du bloc supérieur 15 et la face supérieure du piston de serrage 4. L'intérieur de la cage 3 comporte un espace destiné à recevoir une capsule 1 comportant une membrane flexible 7 dans sa partie inférieure. La partie inférieure 12 de la cage 3 est adaptée pour contacter la collerette 12 de la capsule 1. Une pièce d'éjection 17 est disposée dans la partie supérieure de la cage 3 et montée coulissante par rapport à cette dernière. La pièce d'éjection 17 comporte dans sa partie inférieure des pointes 9 destinées à percer la face supérieure de la capsule 1. Un espace d'expansion 10 est formé entre la face supérieure externe de la cage 3 et la paroi supérieure interne du piston de serrage 4. La variation de l'espace d'expansion 10 sera discutée plus loin dans le texte.

Un porte-capsule 2 constitué principalement d'une plaque horizontale perforée est disposé dans la partie inférieure du dispositif. Un ensemble de pointes 6, fixées à un support 8 disposé sous le porte-capsule 2, sont montées mobiles relativement au porte-capsule 2, au travers de ses perforations.

Le dispositif fonctionne comme suit :

Une capsule 1 est initialement introduite dans la cage 3 (figure 1).

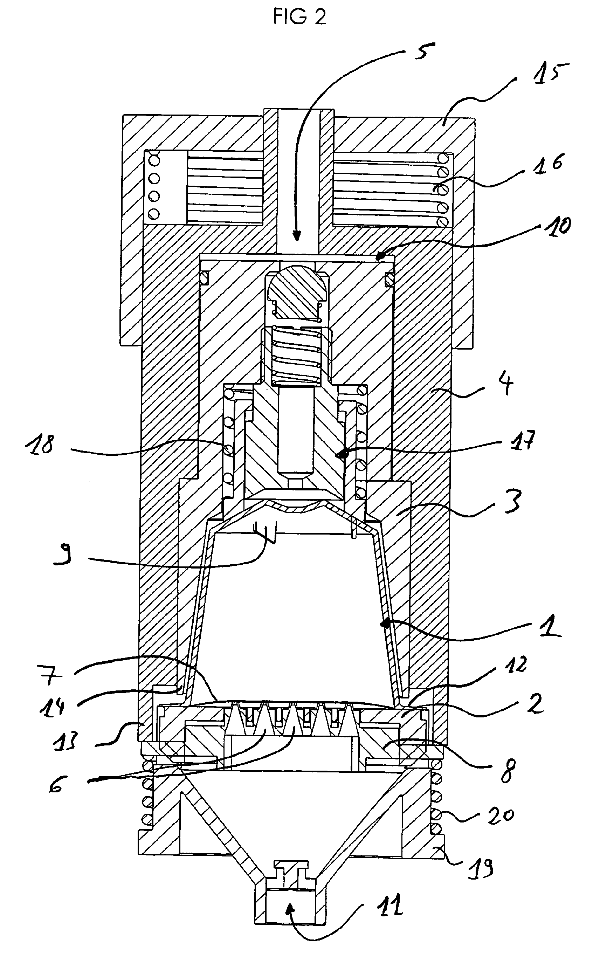

L'ensemble constitué du bloc supérieur 15, du piston de serrage 4 et de la cage 3 est ensuite abaissé et atteint une position intermédiaire (figure 2) qui se caractérise par un contact entre l'extrémité inférieure 13 du piston de serrage 4 et le support de pointes 8. Il convient de relever qu'à ce stade, les pointes 6 émergent légèrement du porte-capsule 2 mais ne percent pas la membrane 7 car cette dernière présente une certaine flexibilité et que par ailleurs, l'eau sous pression n'a pas encore été introduite dans la capsule 1.

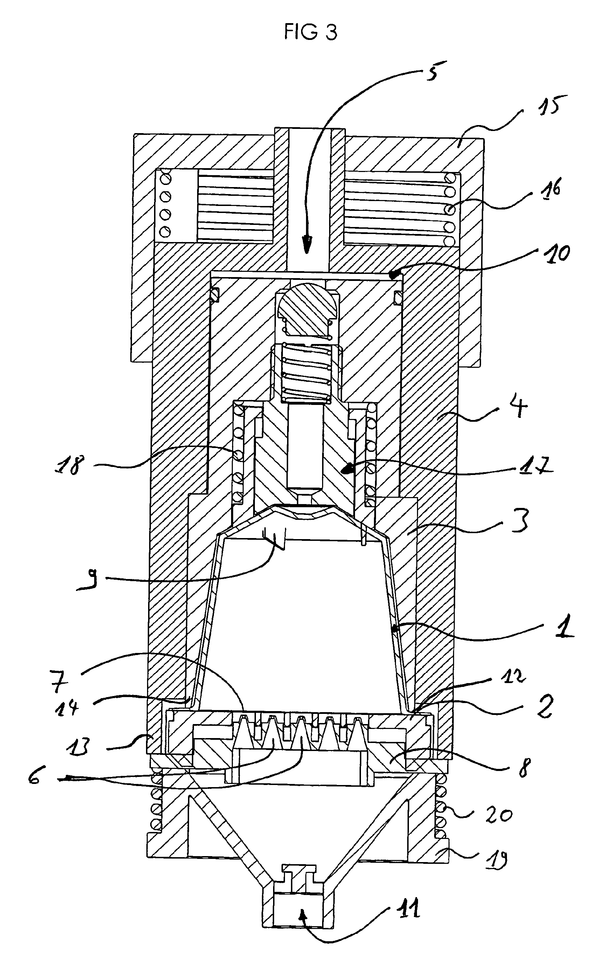

L'ensemble constitué du bloc supérieur 15, du piston de serrage 4 et de la cage 3 continue d'être abaissé jusqu'à ce que le dispositif se trouve dans une position d'amorçage (figure 3). Ce dernier mouvement a pour effet de déplacer le support de pointes 8 et les pointes 6 vers le bas, ce qui entraîne la rétraction des pointes 6 dans le porte-capsule 2. Simultanément, la partie inférieure 12 de la cage 3 vient buter contre la collerette 12 de la capsule 1, assurant ainsi une étanchéité optimale entre la capsule 1 et l'intérieur de la cage 3.

On remarquera par ailleurs qu'en position d'amorçage, la pièce d'éjection 17 s'est rétractée dans un logement disposé dans la partie supérieure de la cage 3, ce qui a eu pour effet de comprimer un ressort d'éjection 18 qui est disposé entre la pièce d'éjection 17 et la paroi interne du logement.

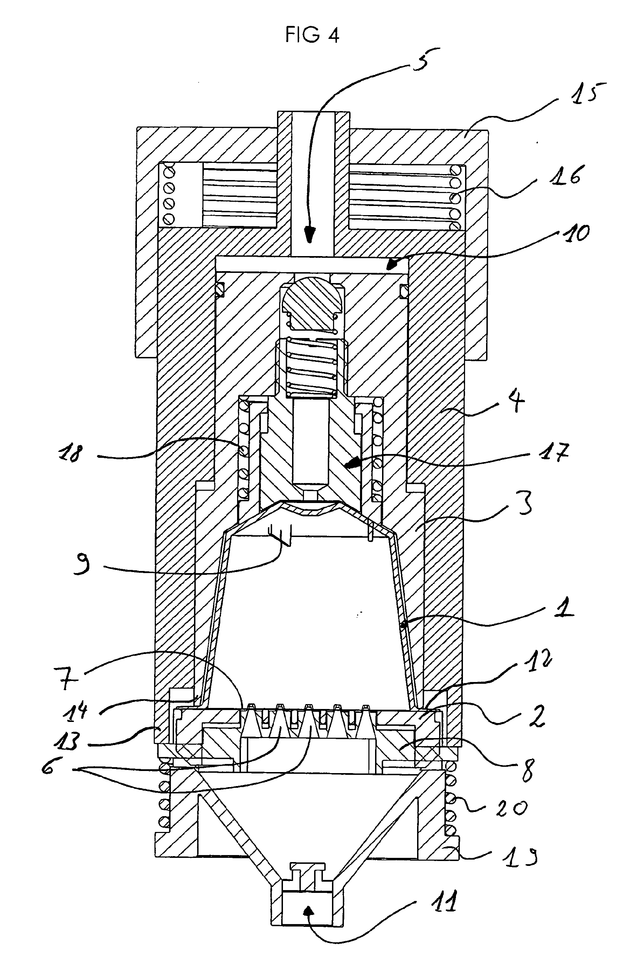

De l'eau sous pression est alors introduite dans le dispositif (figure 4). En remplissant notamment l'espace d'expansion 10, elle a pour effet d'entraîner le piston de serrage 4 vers le haut. Simultanément, l'eau pénètre dans la capsule 1. Il en résulte une augmentation de pression à l'intérieur de celle-ci et la membrane 7 se tend.

Le déplacement du piston de serrage 4 vers le haut entraîne également le support de pointes 8 vers le haut.

L'émergence des pointes 6 à travers le porte-capsule 2 induit le percement de la membrane 7. Le mélange d'eau avec le contenu de la capsule 1 (p.ex. du café) s'écoule donc à travers l'orifice de sortie de boisson 11.

Une fois l'opération d'extraction effectuée, l'ensemble constitué du bloc supérieur 15, du piston de serrage 4 et de la cage 3 est relevé. Le ressort d'éjection 18 se détend, entraînant de la sorte la pièce d'éjection 17 vers le bas. Ce mouvement a pour effet de faciliter l'éjection de la capsule 1 en dehors du dispositif.

Il va sans dire que l'invention ne se limite pas au dispositif illustré sur les figures 1 à 4. Elle couvre également tout mécanisme tel que décrit dans les revendications.

Toute forme appropriée peut être envisagée pour les moyens d'éjection.

## Revendications

1. Dispositif pour la préparation d'une boisson par extraction d'une dose, p.ex. de café moulu, contenue dans une capsule (1) dotée d'une membrane d'extraction (7), ledit dispositif comprenant une entrée d'eau (5), un porte-capsule (2), une cage à capsule (3), des moyens de serrage et des moyens pour extraire ladite boisson à travers la membrane (7), lesdits moyens de serrage comprenant un piston (4), ladite cage à capsule (3) comportant des moyens d'éjection de capsule (17) **caractérisé en ce que**
- les moyens d'éjection de la capsule (17) sont composés de deux parties, à savoir une pièce d'éjection (17) et un ressort, la pièce d'éjection (17) étant montée coulissante par rapport à la partie supérieure de la cage (3),
- le dispositif comprend un logement disposé dans la partie supérieure de la cage (3);
le dispositif étant configuré de manière à ce qu'en position d'amorçage, la pièce d'éjection (17) est rétractée dans le logement.

2. Dispositif selon la revendication précédente comprenant un piston de serrage (4) monté mobile par rapport à la cage.

3. Dispositif selon l'une des revendications précédentes dans lequel les moyens pour extraire ladite boisson sont des pointes (6).

4. Dispositif selon la revendication 3 dans lequel les pointes (6) sont montées mobiles relativement au porte-capsule (2).

5. Dispositif selon la revendication 4 comprenant un mécanisme pour rendre les pointes mobiles (6) solidaire du piston (4).

## Patentansprüche

1. Vorrichtung zur Zubereitung eines Getränks durch Extraktion einer Dosis, z.B. von gemahlenem Kaffee, die in einer Kapsel (1) enthalten ist, welche mit einer Extraktionsmembran (7) versehen ist, wobei die Vorrichtung einen Wassereinlass (5), einen Kapselträger (2), einen Kapselkäfig (3), Spanneinrichtungen und Einrichtungen zur Extraktion des Getränks durch die Membran (7) enthält, wobei die Spanneinrichtungen einen Kolben (4) enthalten, wobei der Kapselkäfig (3) Kapselauswurfeinrichtungen (17) aufweist; **dadurch gekennzeichnet, dass**
- die Auswurfeinrichtungen (17) der Kapsel zwei Teilen beinhalten, nämlich einem Auswurfteil (17) und einer Feder, wobei der Auswurfteil (17) bezüglich des oberen Bereichs des Käfigs (3) gleitend montiert ist,
- die Vorrichtung eine Aufnahme enthält, die im oberen Bereich des Käfigs (3) angeordnet ist;
wobei die Vorrichtung so konfiguriert ist, dass in der Startstellung der Auswurfteil (17) in die Aufnahme zurückgezogen ist.

2. Vorrichtung nach dem vorhergehenden Anspruch, die einen Spannkolben (4) enthält, der bezüglich des Käfigs beweglich montiert ist.

3. Vorrichtung nach einem der vorhergehenden Ansprüche, wobei die Einrichtungen zur Extraktion des Getränks Spitzen (6) sind.

4. Vorrichtung nach Anspruch 3, wobei die Spitzen (6) bezüglich des Kapselträgers (2) beweglich montiert sind.

5. Vorrichtung nach Anspruch 4, die einen Mechanismus enthält, um die beweglichen Spitzen (6) fest mit dem Kolben (4) zu verbinden.

## Claims

1. Device for preparing a drink by extracting a serving, for example of ground coffee, contained in a cartridge (1) equipped with an extraction membrane (7), said device including a water inlet (5), a cartridge holder (2), a cartridge cage (3), clamping means and means for extracting said drink through the membrane (7), said clamping means comprising a piston (4), said cartridge cage (3) comprising cartridge ejection means (17), **characterized in that**
- the means for ejecting the cartridge (17) comprise two parts, namely an ejection part (17) and a spring, the ejection part (17) being mounted in a sliding manner with respect to the upper part of the cage (3),
- the device comprises a housing located in the upper part of the cage (3);
the device being configured such that, in the starting position, the ejection part (17) is retracted into the housing.

2. Device according to the preceding claim, including a clamping piston (4) mounted in a movable manner with respect to the cage.

3. Device according to either of the preceding claims, in which the means for extracting said drink are spikes (6).

4. Device according to Claim 3, in which the spikes (6) are mounted in a movable manner in relation to the cartridge holder (2).

5. Device according to Claim 4, including a mechanism for securing the movable spikes (6) to the piston (4) .
